# EUROPEAN PATENT APPLICATION

(11) **EP 2 821 321 A2**
(43) Date of publication of application: **07.01.2015**
(21) Application number: 14175533.0
(22) Date of filing: 03.07.2014
(51) Int. Cl.: B62D 6/00

(54) **Electric power steering system**

(30) Priority: 05.07.2013 JP 2013141453
(71) Applicant: JTEKT CORPORATION, Osaka-shi Osaka 542-8502 (JP)
(72) Inventor: Hayashi, Keita, Osaka-shi, Osaka 542-8502 (JP); Suzuki, Hiroshi, Osaka-shi, Osaka 542-8502 (JP); Ueno, Masayoshi, Osaka-shi, Osaka 542-8502 (JP)
(74) Representative: Winter, Brandl, Fürniss, Hübner, Röss, Kaiser, Polte - Partnerschaft mbB

(57) **Abstract**

An electric power steering system includes a motor (31) that generates an assist force; a torque sensor that generates a signal according to a steering torque; and an ECU (40) that computes a basic current command value (Iₑ*) corresponding to the assist force, based on the steering torque, and that controls the motor (31) based on the basic current command value (Iₑ*) and a stabilization current command value (Iᵥ*) computed by an external SC controller (80) so as to stabilize behavior of a vehicle when the behavior of the vehicle is unstable. When the stabilization current command value (Iᵥ*) is input, the ECU (40) determines whether the behavior of the vehicle is stable, and when it is determined that the behavior of the vehicle is stable, the ECU (40) controls the motor (31) based on the basic current command value (Iₑ*) without using the stabilization current command value (Iᵥ*).

## Description

### BACKGROUND OF THE INVENTION

### 1. Field of the Invention

The present invention relates to an electric power steering system.

### 2. Description of the Related Art

An electric power steering system (hereinafter, referred to as EPS) that assists a driver's steering operation by applying power of a motor to a steering mechanism of a vehicle is known. A controller of the EPS computes an assist current command value, for example, on the basis of a steering torque and a vehicle speed acquired through the use of various sensors, and controls the driving of the motor on the basis of the computed command value.

An antiskid brake system (hereinafter, referred to as stability control (SC)) of a vehicle is known, which instantaneously brakes one wheel or plural wheels or automatically adjusts the output of an engine when unstable behavior of a vehicle, such as oversteering or understeering, is detected on the basis of various pieces of information acquired through the use of the various sensors.

A controller of the SC calculates a target steering angle so as to improve the unstable state of the vehicle, and generates a current command value as a control signal for driving the motor to achieve the target steering angle, in addition to adjusting the brake or the output of the engine. A controller of the EPS computes a final assist current command value taking into account the command value generated by the controller of the SC. Japanese Patent No. 4478037 describes a controller that cooperatively controls a controlled object taking into account a control signal generated by another controller in the above-mentioned manner.

The controller of the EPS controls the driving of the motor taking into account the current command value generated by the controller of the SC. Accordingly, in a case where a failure occurs in the controller of the SC and thus the current command value for cooperative control is generated in spite of stable behavior of the vehicle, there is a possibility that the behavior of the vehicle may deteriorate.

### SUMMARY OF THE INVENTION

An object of the present invention is to provide an electric power steering system that restrains deterioration of behavior of a vehicle caused by applying an assist force to a steering mechanism.

According to an aspect of the present invention, there is provided an electric power steering system that includes a motor that generates an assist force applied to a steering mechanism of a vehicle; a torque sensor that generates a torque signal according to a steering torque applied to a steering shaft constituting the steering mechanism; and a controller that computes a first controlled variable corresponding to the assist force, based on the torque signal, and that controls the motor based on the first controlled variable and a second controlled variable computed and output by an external computing unit so as to stabilize behavior of the vehicle when it is determined that the behavior of the vehicle is unstable. The controller estimates whether or not the behavior of the vehicle is stable based on a state quantity that is acquired through use of a plurality of types of sensors provided in the vehicle and that indicates the behavior of the vehicle, and the controller controls the motor based on the first controlled variable without using the second controlled variable when it is estimated that the behavior of the vehicle is stable.

With this configuration, when it is estimated that the behavior of the vehicle is stable, the controller applies the assist force to the steering mechanism by controlling the motor based on the first controlled variable without using the second controlled variable. Thus, in a case where a failure or the like occurs in an SC controller that is the external computing unit and thus the second controlled variable for stabilizing the behavior of the vehicle is erroneously generated in spite of stable behavior of the vehicle, it is possible to restrain deterioration of the behavior of the vehicle.

In the electric power steering system according to the above-mentioned aspect, the plurality of types of sensors may include a vehicle speed sensor that detects a traveling speed of the vehicle, a yaw rate sensor that detects a yaw rate of the vehicle, and a steering angle sensor that detects a steering angle of the steering shaft, and the controller may determine that the behavior of the vehicle is stable when a difference between an estimated yaw rate estimated from a vehicle speed and the steering angle and an actual yaw rate detected through use of the yaw rate sensor is less than a predetermined yaw rate threshold value.

A state in which the difference between the actual yaw rate and the estimated yaw rate is large is a slip state in which so-called oversteering or understeering occurs. As the difference becomes larger, the slip state becomes more difficult for a driver to cope with.

The vehicle speed and the steering angle are required to calculate the estimated yaw rate, and the vehicle speed sensor and the steering angle sensor that respectively detect the vehicle speed and the steering angle are generally used in the electric power steering system. Thus, with the above-mentioned configuration, it is possible to estimate whether or not the behavior of the vehicle is stable, without providing an additional sensor that detects the state of the vehicle.

In the electric power steering system according to the above-mentioned aspect, the controller may set the yaw rate threshold value to a lower value as the vehicle speed becomes higher. It is known that as the vehicle speed increases, the probability that the vehicle slips increases. Thus, in a case where the behavior of the vehicle is made unlikely to be unstable by changing the yaw rate threshold value according to the vehicle speed, the control of the motor based on the second controlled variable is restricted, and accordingly, it is possible to restrain the behavior of the vehicle from deteriorating due to the control of the motor based on the erroneously-generated second controlled variable.

In the electric power steering system according to the above-mentioned aspect, the controller may include a storage unit, and when the motor is to be controlled without adding the second controlled variable to the first controlled variable, the controller may store data indicating that the second controlled variable is not to be added to the first controlled variable, in the storage unit.

With this configuration, it can be confirmed, through the use of the storage unit, that although the vehicle is not in a state in which the external computing unit should generate the second controlled variable, the second controlled variable is generated.

The electric power steering system according to the above-mentioned aspect of the present invention, the plurality of types of sensors may include a vehicle speed sensor that detects a traveling speed of the vehicle, a lateral acceleration sensor that detects a lateral acceleration of the vehicle, and a steering angle sensor that detects a steering angle of the steering shaft. The controller may determine that the behavior of the vehicle is stable when a difference between an estimated lateral acceleration estimated from the vehicle speed and the steering angle and an actual lateral acceleration detected by the lateral acceleration sensor is less than a lateral acceleration threshold value that is set in advance based on a slip state with which a driver has difficulty in coping.

The state in which the difference between the actual lateral acceleration and the estimated lateral acceleration is large is the slip state in which so-called oversteering or understeering occurs. As the difference becomes larger, the slip state becomes more difficult for a driver to cope with.

The vehicle speed and the steering angle are required to calculate the estimated lateral acceleration. The vehicle speed sensor and the steering angle sensor that respectively detect the vehicle speed and the steering angle are provided in many vehicles, and the detected vehicle speed and the detected steering angle are already used for other controls. Thus, with the above-mentioned configuration, it is possible to estimate whether or not the vehicle is in the slip state, without providing an additional sensor that detects the state of the vehicle.

The electric power steering system according to the present invention has an effect of restraining the deterioration of the behavior of the vehicle caused by applying the assist force to the steering system.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a block diagram illustrating a schematic configuration of an electric power steering system;
FIG. 2 is a block diagram illustrating a schematic configuration of an ECU;
FIG. 3 is a flowchart illustrating processing relating to skidding determination; and
FIG. 4 is a relation diagram illustrating a relation between a yaw rate threshold value and a vehicle speed.

### DETAILED DESCRIPTION OF EMBODIMENTS

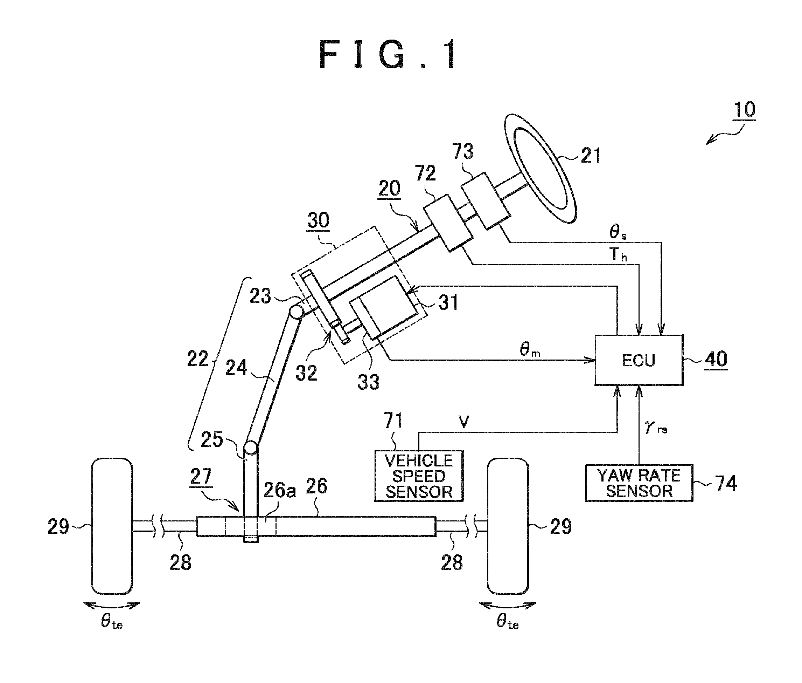

Hereinafter, an electric power steering system according to an embodiment of the present invention will be described. As illustrated in FIG. 1, the electric power steering system 10 includes a steering mechanism 20 that steers steered wheels on the basis of a driver's steering operation, a steering assist mechanism 30 that assists the driver's steering operation, and an ECU 40 that controls the operation of the steering assist mechanism 30.

The steering mechanism 20 includes a steering wheel 21 that is operated by a driver, and a steering shaft 22 that rotates together with the steering wheel 21. The steering shaft 22 includes an intermediate shaft 24 that is connected to the lower end of a column shaft 23 connected to the center of the steering wheel 21, and a pinion shaft 25 that is connected to the lower end of the intermediate shaft 24. The lower end of the pinion shaft 25 engages with a portion 26a having rack teeth in a rack shaft 26 extending in a direction intersecting the pinion shaft 25. The rotational motion of the steering shaft 22 is converted to a reciprocating linear motion of the rack shaft 26 by a rack and pinion mechanism 27 including the pinion shaft 25 and the rack shaft 26. The reciprocating linear motion is transmitted to right and left steered wheels 29 via tie rods 28 connected to respective ends of the rack shaft 26, whereby the steered angle θta of the steered wheels 29 is changed. The traveling direction of the vehicle is changed due to the change of the steered angle θta of the steered wheels 29.

The steering assist mechanism 30 includes a motor 31 as a source that generates a steering assist force. A three-phase AC motor such as a brushless motor is used as the motor 31. The motor 31 is connected to the column shaft 23 via a speed reduction mechanism 32 including a worm and a wheel. The speed reduction mechanism 32 reduces the rotation speed of the motor 31 and transmits a motor torque to the column shaft 23. The motor torque is applied, as the steering assist force, to the steering shaft 22, whereby the driver's steering operation is assisted. A TMR sensor 33 is provided in the motor 31. The TMR sensor 33 outputs a sinusoidal signal whose amplitude value varies depending on the rotation angle θm of the motor 31.

The ECU 40 acquires detection results of various sensors provided in the vehicle in response to the driver's request or as information indicating a traveling state, and controls the motor 31 on the basis of various pieces of information thus acquired. Examples of various sensors include a vehicle speed sensor 71, a torque sensor 72, a steering sensor 73, and a yaw rate sensor 74. The vehicle speed sensor 71 detects a vehicle speed V as a traveling speed of the vehicle. The torque sensor 72 is attached to the column shaft 23, and detects a steering torque Tₕ applied to the steering shaft 22 via the steering wheel 21. The steering sensor 73 is attached to the column shaft 23, and detects a steering angle θₛ that is a rotation angle of the column shaft 23. The yaw rate sensor 74 detects an actual yaw rate γᵣₑ actually applied to the vehicle. The ECU 40 controls the motor 31 on the basis of the vehicle speed V, the steering torque Tₕ, the steering angle θₛ, and the actual yaw rate γᵣₑ acquired through the use of the sensors.

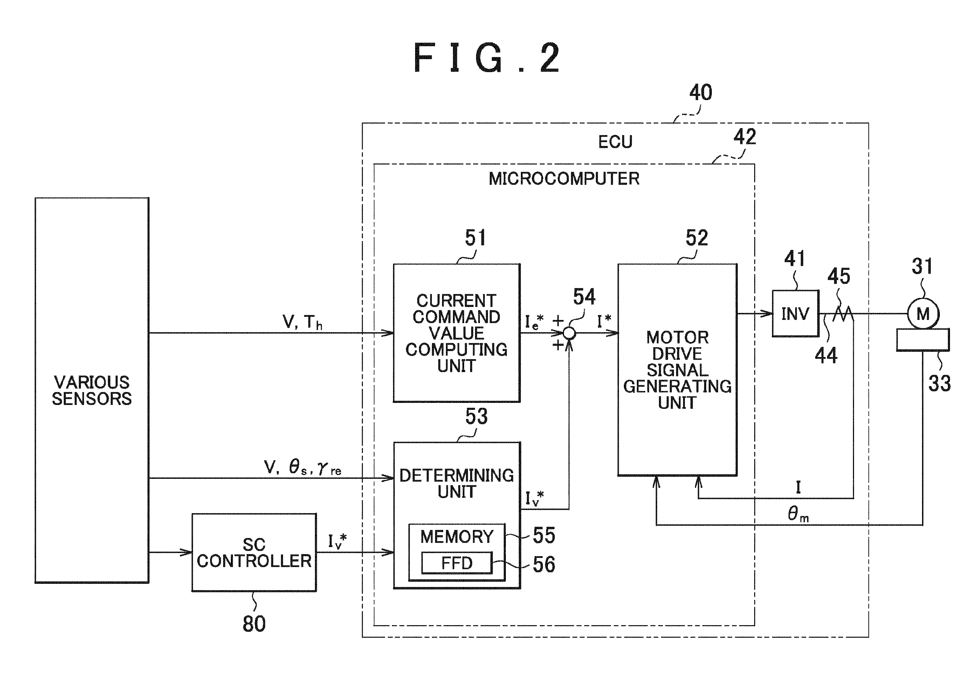

A hardware configuration of the ECU will be described below. In this embodiment, the ECU 40 corresponds to a motor controller. As illustrated in FIG. 2, the ECU 40 includes an inverter circuit 41 and a microcomputer 42.

The inverter circuit 41 converts a DC voltage supplied from a DC power supply, such as a battery, into a three-phase AC voltage on the basis of a motor drive signal generated by the microcomputer 42. The three-phase AC voltage obtained by conversion is supplied to the motor 31 via power supply lines 44 for the respective phases. The power supply line 44 for each phase is provided with a current sensor 45. These current sensors 45 detect actual current values I in the power supply lines 44 for the respective phases. In FIG. 2, the power supply lines 44 for the respective phases and the current sensors 45 for the respective phases are collectively illustrated as the single power supply line 44 and the single current sensor 45, respectively, for the purpose of convenience of explanation.

The microcomputer 42 acquires the vehicle speed V, the steering torque Tₕ, the steering angle θₛ, and the actual yaw rate γᵣₑ in each predetermined sampling period. The microcomputer 42 acquires a stabilization current command value Iᵥ* that is generated by a stability control (SC) controller 80 so as to stabilize behavior of the vehicle. The SC controller 80 determines whether or not the vehicle is skidding through the use of various sensors provided in the vehicle, and generates the stabilization current command value Iᵥ* so as to adjust the steered angle θₜₐ through the control of the motor 31, thereby stopping the skidding and stabilizing the behavior of the vehicle when the SC controller 80 determines that the vehicle is skidding. The microcomputer 42 generates a PWM drive signal as a motor drive signal on the basis of the various pieces of information acquired. The SC controller 80 corresponds to an external computing unit provided outside the electric power steering system.

The functional configuration of the microcomputer will be described below. As illustrated in FIG. 2, the microcomputer 42 includes various processing units that are implemented by executing a control program stored in a storage unit (not illustrated). The microcomputer 42 includes a current command value computing unit 51, a motor drive signal generating unit 52, a skid determining unit 53, and an adder 54 as the processing units.

The current command value computing unit 51 acquires the vehicle speed V and the steering torque Tₕ and computes a basic current command value Iₑ* on the basis of the acquired information. The current command value computing unit 51 sets the absolute value of the basic current command value Iₑ* to a larger value as the absolute value of the steering torque Tₕ becomes larger and as the vehicle speed V becomes lower.

The skid determining unit 53 determines whether or not the vehicle is in a skid state, that is, whether or not the vehicle is in a state in which the stabilization current command value Iᵥ* should be generated, when the stabilization current command value Iᵥ* is acquired from the SC controller 80. The skid determining unit outputs the stabilization current command value Iᵥ* without change when the vehicle is in the skid state, and sets the stabilization current command value Iᵥ* to zero when the vehicle is not in the skid state. The skid determining unit 53 includes a memory 55. The memory 55, which corresponds to a storage unit, stores various pieces of information that are specific to the vehicle and used for determining whether or not the vehicle is in the skid state. When the stabilization current command value Iᵥ* is set to zero, the memory 55 stores freeze frame data (FFD) 56 indicating that although the vehicle is not in the skid state, the stabilization current command value Iᵥ* is input. The determination on whether or not the vehicle is in the skid state is performed on the basis of the vehicle speed V, the steering angle θₛ, and the actual yaw rate γᵣₑ acquired through the use of the sensors. Details of the determination will be described later.

The adder 54 adds the basic current command value Iₑ* and the stabilization current command value Iᵥ* to generate a current command value I*. The motor drive signal generating unit 52 acquires the current command value I* and the actual current value I, and performs a current feedback control so that the actual current value I follows the current command value I*, on the basis of the acquired information. The motor drive signal generating unit 52 calculates a difference between the current command value I* and the actual current value I, and generates the motor drive signal so as to eliminate the difference.

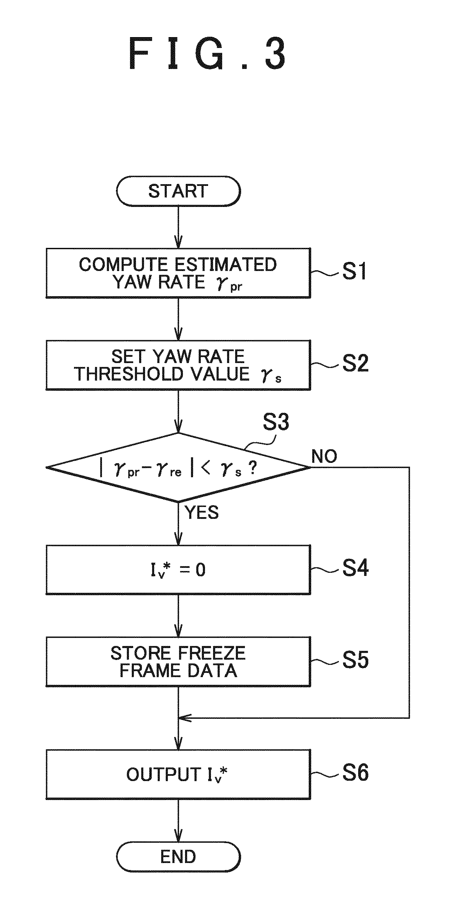

Processing relating to skidding determination performed in the skid determining unit 53 will be described with reference to the flowchart illustrated in FIG. 3. The processing is started in response to input of the stabilization current command value Iᵥ* to the skid determining unit 53.

As illustrated in FIG. 3, first, the skid determining unit 53 computes an estimated yaw rate γₚᵣ (step S1). The estimated yaw rate γₚᵣ is calculated from a constant specific to the vehicle such as a vehicle weight, the vehicle speed V, and the steering angle θₛ.

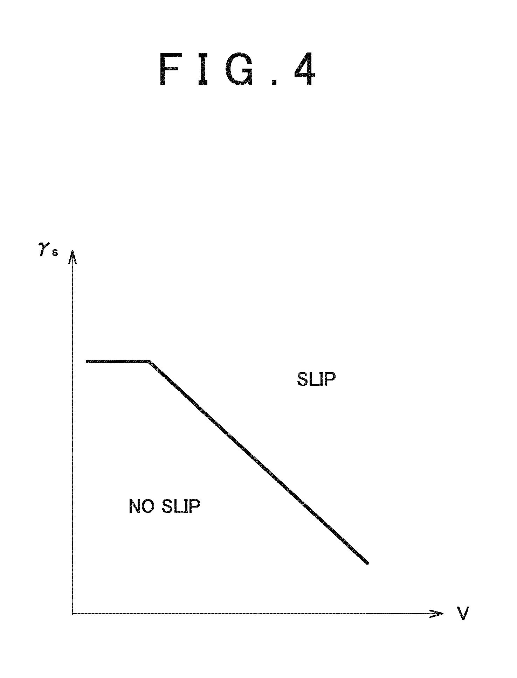

The skid determining unit 53 sets a yaw rate threshold value γs (step S2). As illustrated in FIG. 4, the yaw rate threshold value γs is set to be inversely proportional to the vehicle speed V. This is because the probability that the vehicle skids is proportional to the vehicle speed V.

The skid determining unit 53 determines whether or not the absolute value of a difference between the estimated yaw rate γₚᵣ and the actual yaw rate γᵣₑ (a value obtained by subtracting the actual yaw rate γᵣₑ from the estimated yaw rate γₚᵣ) is less than the yaw rate threshold value γₛ (step S3).

When the determination result of step S3 is YES, that is, when the absolute value of the difference between the estimated yaw rate γₚᵣ and the actual yaw rate γᵣₑ is less than the yaw rate threshold value γₛ, the vehicle is not skidding and thus the stabilization current command value Iᵥ* is set to zero (step S4). The freeze frame data (FFD) 56 is stored, the FFD 56 indicating that although the vehicle is not in the skid state, the stabilization current command value Iᵥ* is input (step S5). The skid determining unit 53 outputs the stabilization current command value Iᵥ* and ends the series of processes.

When the determination result of step S3 is NO, that is, when the absolute value of the difference between the estimated yaw rate γₚᵣ and the actual yaw rate γᵣₑ is greater than or equal to the yaw rate threshold value γₛ, the vehicle is skidding, that is, the vehicle is in the state in which the stabilization current command value Iᵥ* should be generated, and thus the input stabilization current command value Iᵥ* is output without change in step S6.

As described above, according to this embodiment, the following advantageous effects are obtained. The ECU 40 includes the skid determining unit 53. The skid determining unit 53 determines whether or not the vehicle is skidding when the stabilization current command value Iᵥ* is input from the SC controller 80, and sets the stabilization current command value Iᵥ* to zero when the vehicle is not skidding. That is, in a case where the SC controller 80 generates the stabilization current command value Iᵥ* when the vehicle is not in the skid state, the stabilization current command value Iᵥ* is set to zero and is not used for the control of the motor 31. Accordingly, it is possible to restrain deterioration of the behavior of the vehicle due to the control of the motor 31.

The skid determining unit 53 calculates the estimated yaw rate γₚᵣ from the constant specific to the vehicle such as the vehicle weight, the vehicle speed V, and the steering angle θₛ. The vehicle speed V and the steering angle θₛ are used also for other controls. The actual yaw rate γᵣₑ detected through the use of the yaw rate sensor 74 is used to generate the stabilization current command value Iᵥ* in the SC controller 80. Thus, the skid determining unit 53 can determine whether or not the vehicle is in the skid state without providing the vehicle with an additional sensor that detects the state of the vehicle.

The skid determining unit 53 changes the yaw rate threshold value γₛ so that the yaw rate threshold value γₛ is inversely proportional to the vehicle speed V. This is because the probability that the vehicle skids increases as the vehicle speed V increases. When the vehicle speed V is low, that is, when the driver can easily control the behavior of the vehicle, the yaw rate threshold value γₛ is set to a large value. When the vehicle speed V is low, it is possible to restrain the deterioration of the behavior of the vehicle due to the control of the motor 31, as compared to when the vehicle speed V is high.

When the input stabilization current command value Iᵥ* is set to zero, the skid determining unit 53 stores the freeze frame data (FFD) 56 in the memory 55. Accordingly, it can be confirmed that although the vehicle is not in the state in which the SC controller 80 should generate the stabilization current command value Iᵥ*, the SC controller 80 generates the stabilization current command value Iᵥ*.

The above-mentioned embodiment may be modified as follows. In the above-mentioned embodiment, the skid determining unit 53 determines whether or not the vehicle is skidding on the basis of the yaw rate, more specifically, on the basis of the magnitude relation between the difference between the estimated yaw rate γₚᵣ and the actual yaw rate γᵣₑ, and the yaw rate threshold value γₛ. However, the skid determining unit 53 may perform the determination using other parameters. For example, the determination may be performed using a lateral acceleration. In this case, the skid determining unit 53 calculates an estimated lateral acceleration Gₚᵣ from the constant specific to the vehicle such as the vehicle weight, the vehicle speed V, and the steering angle θₛ, instead of the estimated yaw rate γₚᵣ. Instead of the yaw rate threshold value γₛ, a lateral acceleration Gₛ is stored in the memory 55. Further, the vehicle includes a lateral acceleration sensor that detects an actual lateral acceleration Gᵣₑ. In this configuration as well, it is possible to obtain the same advantageous effects as those obtained in the above-mentioned embodiment.

In the above-mentioned embodiment, the skid determining unit 53 determines whether or not the absolute value of the difference between the estimated yaw rate γₚᵣ and the actual yaw rate γᵣₑ is less than the yaw rate threshold value γₛ, and sets the stabilization current command value Iᵥ* to zero when the absolute value of the difference is less than the yaw rate threshold value γₛ. However, the estimated yaw rate γₚᵣ and the actual yaw rate γᵣₑ may be directly compared and it may be determined that the vehicle is skidding when there is a difference therebetween. That is, the stabilization current command value Iᵥ* may be set to zero only when the difference between the estimated yaw rate γₚᵣ and the actual yaw rate γᵣₑ is zero.

In the above-mentioned embodiment, the skid determining unit 53 may not store the freeze frame data (FFD) 56 in the memory 55 when the input stabilization current command value Iᵥ* is set to zero. The memory 55 may be provided separately from the skid determining unit 53.

In the above-mentioned embodiment, the current command value computing unit 51 calculates the basic current command value Iₑ* on the basis of the vehicle speed and the steering torque. However, other vehicle parameter(s), such as the yaw rate, may be additionally used to calculate the basic current command value Iₑ*.

In the above-mentioned embodiment, the present invention is embodied as the electric power steering system 10 in which a steering assist force is applied to the column shaft 23. However, the present invention may be embodied, for example, as a type of electric power steering system in which the steering assist force is applied to the intermediate shaft 24, the pinion shaft 25, or the rack shaft 26.

In the above-mentioned embodiment, it is determined whether or not behavior of the vehicle is stable by determining whether or not the vehicle is skidding. However, the determination on whether or not the behavior of the vehicle is stable may be performed by using another determination.

## Claims

1. An electric power steering system comprising:
a motor that generates an assist force applied to a steering mechanism of a vehicle;
a torque sensor that generates a torque signal according to a steering torque applied to a steering shaft constituting the steering mechanism; and
a controller that computes a first controlled variable corresponding to the assist force, based on the torque signal, and that controls the motor based on the first controlled variable and a second controlled variable computed and output by an external computing unit so as to stabilize behavior of the vehicle when it is determined that the behavior of the vehicle is unstable,
wherein the controller estimates whether or not the behavior of the vehicle is stable based on a state quantity that is acquired through use of a plurality of types of sensors provided in the vehicle and that indicates the behavior of the vehicle, and the controller controls the motor based on the first controlled variable without using the second controlled variable when it is estimated that the behavior of the vehicle is stable.

2. The electric power steering system according to claim 1,
wherein the plurality of types of sensors include a vehicle speed sensor that detects a traveling speed of the vehicle, a yaw rate sensor that detects a yaw rate of the vehicle, and a steering angle sensor that detects a steering angle of the steering shaft, and
wherein the controller determines that the behavior of the vehicle is stable when a difference between an estimated yaw rate estimated from a vehicle speed and the steering angle and an actual yaw rate detected through use of the yaw rate sensor is less than a predetermined yaw rate threshold value.

3. The electric power steering system according to claim 2, wherein the controller sets the yaw rate threshold value to a lower value as the vehicle speed becomes higher.

4. The electric power steering system according to any one of claims 1 to 3,
wherein the controller includes a storage unit, and
wherein when the motor is to be controlled without adding the second controlled variable to the first controlled variable, the controller stores data indicating that the second controlled variable is not to be added to the first controlled variable, in the storage unit.

5. The electric power steering system according to claim 1,
wherein the plurality of types of sensors include a vehicle speed sensor that detects a traveling speed of the vehicle, a lateral acceleration sensor that detects a lateral acceleration of the vehicle, and a steering angle sensor that detects a steering angle of the steering shaft, and
wherein the controller determines that the behavior of the vehicle is stable when a difference between an estimated lateral acceleration estimated from the vehicle speed and the steering angle and an actual lateral acceleration detected by the lateral acceleration sensor is less than a lateral acceleration threshold value that is set in advance based on a slip state with which a driver has difficulty in coping.
